(19) Europäisches Patentamt
European Patent Office
Office européen des brevets

(11) **EP 4 782 226 A1**

(12) **EUROPEAN PATENT APPLICATION**

(43) Date of publication:
**29.07.2026 Bulletin 2026/31**

(21) Application number: **25224650.9**

(22) Date of filing: **17.12.2025**

(51) International Patent Classification (IPC):
**B60C 19/00** (2006.01)  **B60C 5/00** (2006.01)
**B60C 11/03** (2006.01)  **B60C 11/04** (2006.01)
**B60C 11/11** (2006.01)  **B60C 9/00** (2006.01)

(52) Cooperative Patent Classification (CPC):
**B60C 11/0309; B60C 9/005; B60C 11/0332;
B60C 11/04; B60C 11/047; B60C 11/11;
B60C 19/002;** B60C 2009/2214; B60C 2011/0341;
B60C 2011/1361

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.01.2025 JP 2025010860**

(71) Applicant: **Sumitomo Rubber Industries, Ltd.
Kobe-shi, Hyogo 651-0072 (JP)**

(72) Inventors:
• **KURATOMI, Yota
Kobe-shi,, 651-0072 (JP)**
• **SAWAKAMI, Isao
Kobe-shi, 651-0072 (JP)**
• **MAESHIMA, Hayato
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **PNEUMATIC TIRE**

(57)      A pneumatic tire 1 includes a tread portion 2, and a sound damper 11 made of a porous material and fixed to a tire inner cavity surface 15s of the tread portion 2. The sound damper 11 extends in a tire circumferential direction along a tire equator C. In a 70% load-applied state where the pneumatic tire 1 is fitted on a standardized rim at a standardized internal pressure, 70% of a standardized load is applied to the pneumatic tire 1, and the pneumatic tire 1 is brought into contact with a flat surface at a camber angle of 0 degrees, a ground-contact surface 14 of the tread portion 2 has a ratio L/Lm of a maximum ground-contact length L in the tire circumferential direction to a ground-contact length Lm, in the tire circumferential direction, within a range centered on the tire equator C and equal to or less than 70% of a maximum ground-contact width W in a tire axial direction, and the ratio L/Lm satisfies the following formula (1):

$$1.00 < L/Lm < 1.10 \ldots(1).$$

## Description

BACKGROUND OF THE INVENTION

Field of the Invention

The present invention relates to a pneumatic tire.

Background Art

Japanese Laid-Open Patent Publication No. 2006-036083 discloses a pneumatic tire. This tire includes a sound damper that is made of a sponge material, is adhered to a tire inner cavity surface, and extends in a circumferential direction along the tire equator, and radiation grooves that are formed on the outer surface of a tread portion, extend in the circumferential direction along the tire equator, and dissipate heat accumulated in the sound damper.

In association with the recent increase in vehicle power output, improvement in high-speed durability is desired for a pneumatic tire including a sound damper.

The present invention has been made in view of the above circumstances, and a major object of the present invention is to provide a pneumatic tire that can be expected to achieve good quietness and high-speed durability.

SUMMARY OF THE INVENTION

The present invention is directed to a pneumatic tire including: a tread portion; and a sound damper made of a porous material and fixed to a tire inner cavity surface of the tread portion, wherein the sound damper extends in a tire circumferential direction along a tire equator, and in a 70% load-applied state where the pneumatic tire is fitted on a standardized rim at a standardized internal pressure, 70% of a standardized load is applied to the pneumatic tire, and the pneumatic tire is brought into contact with a flat surface at a camber angle of 0 degrees, a ground-contact surface of the tread portion has a ratio L/Lm of a maximum ground-contact length L in the tire circumferential direction to a ground-contact length Lm, in the tire circumferential direction, within a range centered on the tire equator and equal to or less than 70% of a maximum ground-contact width W in a tire axial direction, and the ratio L/Lm satisfies the following formula (1):

$$1.00 < L/Lm < 1.10 \ldots (1).$$

As a result of adopting the above configuration, the pneumatic tire according to the present invention can be expected to achieve good quietness and high-speed durability.

BRIEF DESCRIPTION OF THE DRAWINGS

FIG. 1 is a tire meridional cross-sectional view showing an example of a pneumatic tire;

FIG. 2 is a partially enlarged view of FIG. 1;

FIG. 3 shows an example of a footprint of a tread portion in a 70% load-applied state;

FIG. 4 is an enlarged perspective view showing an example of protrusions;

FIG. 5 is a development view showing an example of the tread portion of the tire;

FIG. 6 is a partially enlarged view showing a center land portion, an inner middle land portion, and an outer middle land portion in FIG. 5; and

FIG. 7 shows an example of the footprint of the tread portion in the 70% load-applied state.

DETAILED DESCRIPTION

Hereinafter, an embodiment of the present invention will be described with reference to the drawings. It should be understood that the drawings contain exaggerated expressions and expressions that differ from the dimensional ratio of the actual structure in order to help the understanding of the contents of the present invention. In addition, the same or common elements are denoted by the same reference characters throughout each embodiment, and the redundant description thereof is omitted. Furthermore, the specific configurations shown in the embodiment and the drawings are for understanding the contents of the present invention, and the present invention is not limited to the illustrated specific configurations.

[Pneumatic tire]

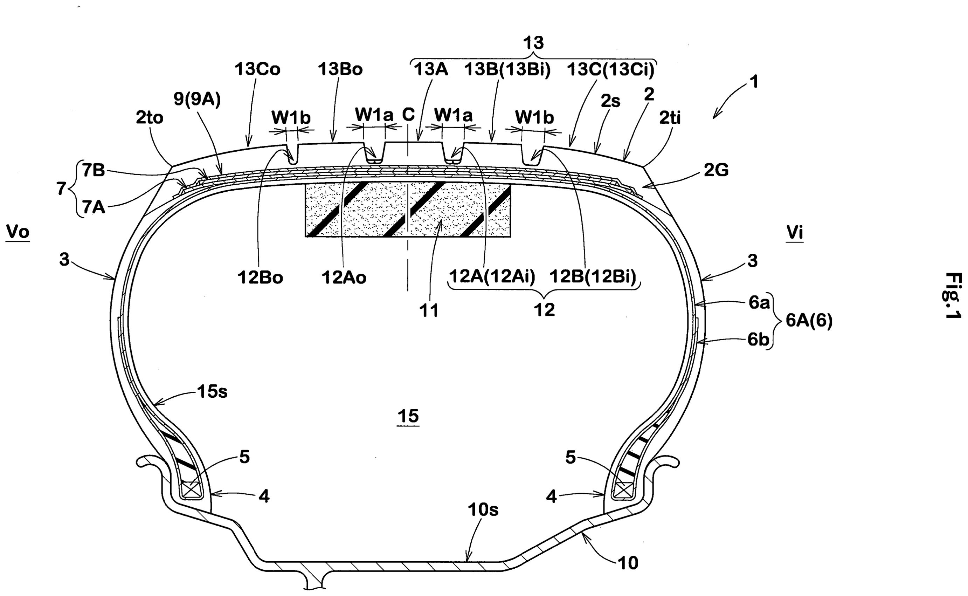

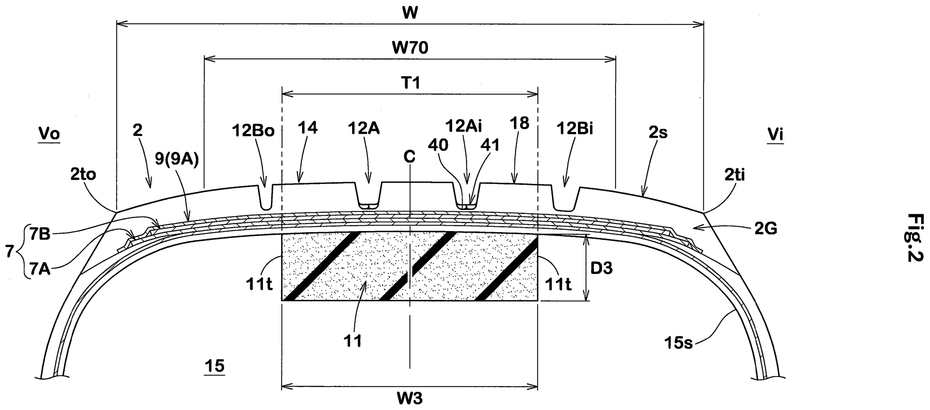

FIG. 1 is a tire meridional cross-sectional view showing an example of a pneumatic tire 1. FIG. 2 is a partially enlarged view of FIG. 1. The pneumatic tire (hereinafter, sometimes referred to as "tire") 1 of the present embodiment is exemplified as, for example, a tire for a passenger car. However, the tire 1 is not limited to use on passenger cars and may also be, for example, a heavy duty tire.

The tire 1 of the present embodiment includes a tread portion 2 and a sound damper 11.

[Tread portion]

The tread portion 2 of the present embodiment has a designated mounting direction to a vehicle. However, the present disclosure is not limited thereto. For example, the mounting direction to the vehicle may not necessarily be designated. The mounting direction to the vehicle is indicated, for example, by letters or marks (not shown) on a sidewall portion (not shown) of the tire 1. In FIG. 1, the right side corresponds to a vehicle inner side Vi, and the left side corresponds to a vehicle outer side Vo. In addition, the tread portion 2 of the present embodiment includes a pair of tread ends (an inner tread end 2ti and an outer tread end 2to in the present example), and a tread surface 2s therebetween. The tread surface 2s is a portion intended to contact with the ground (road surface) during running with the tire, and is formed of a tread rubber 2G.

The pair of tread ends (the inner tread end 2ti and the outer tread end 2to) are specified at the outermost ground contact positions in a tire axial direction in a 70% load-applied state. Here, the "70% load-applied state" refers to a state where 70% of a standardized load is applied to the tire 1 in a standardized state and the tire 1 is brought into contact with a flat surface at a camber angle of 0 degrees.

The standardized state is a state where the tire 1 is fitted on a standardized rim 10 at a standardized internal pressure and no load is applied to the tire 1. In the present specification, unless otherwise specified, the dimensions and the like of the components of the tire are represented by values measured in the standardized state. The dimensions and the like of the components of the tire are allowed to have normal dimensional errors (tolerances) that are unavoidable in the manufacturing process.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is, for example, the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "standardized load" is a load that is defined, in a standard system including a standard on which the tire 1 is based, by the standard for each tire, and is, for example, the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The tread portion 2 of the present embodiment includes a plurality of circumferential grooves 12 continuously extending in a tire circumferential direction, and a plurality of land portions 13 demarcated by the plurality of circumferential grooves 12. In addition, a belt layer 7 and a band layer 9 are embedded in the tread portion 2 of the present embodiment. This belt layer 7 is disposed outward of a carcass 6 in a tire radial direction and inside the tread portion 2 (inward of the band layer 9 in the tire radial direction in the present example).

[Circumferential groove]

The plurality of circumferential grooves 12 continuously extend in the tire circumferential direction, in the tread surface 2s between the pair of tread ends (the inner tread end 2ti and the outer tread end 2to in the present example). With such circumferential grooves 12, water between the tread portion 2 and a road surface (not shown) is discharged during running on the wet road surface, thereby improving wet performance.

The plurality of circumferential grooves 12 of the present embodiment linearly extend along the tire circumferential direction. However, the present disclosure is not particularly limited thereto. The plurality of circumferential grooves 12 may extend, for example, in a wavy or zigzag manner.

Groove widths W1a, W1b and the groove depth (not shown) of the circumferential grooves 12 can be set appropriately. For example, the groove widths W1a, W1b are each set to 2.0% to 8.0% of a maximum ground-contact width W (shown in FIG. 2) in the tire axial direction of a ground-contact surface 14 in the 70% load-applied state. The groove depth is set to, for example, 4.0 to 10.0 mm. As shown in FIG. 2, the maximum ground-contact width W is specified, in the 70% load-applied state, as a distance in the tire axial direction between the pair of tread ends (the inner tread end 2ti and the outer tread end 2to in the present example). In addition, as shown in FIG. 1, the groove widths W1a, W1b are each specified, in the standardized state, as a distance between two groove edges adjacent to each other in a direction orthogonal to a groove center line (not shown).

The plurality of circumferential grooves 12 include at least one center circumferential groove 12A. Further, in the present embodiment, the plurality of circumferential grooves 12 include a pair of the center circumferential grooves 12A, 12A and a pair of shoulder circumferential grooves 12B, 12B. With the center circumferential grooves 12A, 12A and the shoulder circumferential grooves 12B, 12B, water between the tread portion 2 and a road surface (not shown) is discharged over a wide range in the tire axial direction of the tread portion 2, thereby improving wet performance. The plurality of circumferential grooves 12 are not limited to a mode in which the pair of center circumferential grooves 12A, 12A and the pair of shoulder circumferential grooves 12B, 12B are included. For example, depending on the wet performance or the like required of the tire 1, the plurality of circumferential grooves 12 may be composed of the center circumferential groove 12A and the shoulder circumferential groove 12B. Alternatively, the plurality of circumferential grooves 12 may be composed of the center circumferential groove 12A and the pair of shoulder circumferential grooves 12B, 12B.

The pair of center circumferential grooves 12A, 12A are formed adjacent to a tire equator C and continuously extend in the tire circumferential direction. In the present embodiment, the pair of center circumferential grooves 12A, 12A are formed on both sides with respect to the tire equator C in the tire axial direction. In a case where the tread portion 2 has a designated mounting direction to a vehicle as in the present embodiment, the pair of center circumferential grooves 12A, 12A include an inner center circumferential groove 12Ai disposed on the vehicle inner side Vi and an outer center circumferential groove 12Ao disposed on the vehicle outer side Vo. In the present embodiment, the groove widths W1a, W1a of the inner center circumferential groove 12Ai and the outer center circumferential groove 12Ao are equal to each other. However, the present disclosure is not particularly limited thereto, and the groove widths W1a, W1a may be different from each other.

The pair of shoulder circumferential grooves 12B, 12B are respectively disposed between the center circumferential grooves 12A, 12A (the inner center circumferential groove 12Ai and the outer center circumferential groove 12Ao) and the tread ends (the inner tread end 2ti and the outer tread end 2to). In a case where the tread portion 2 has a designated mounting direction to a vehicle as in the present embodiment, the pair of shoulder circumferential grooves 12B, 12B include an inner shoulder circumferential groove 12Bi disposed on the vehicle inner side Vi and an outer shoulder circumferential groove 12Bo disposed on the vehicle outer side Vo. In the present embodiment, the groove width W1b of the outer shoulder circumferential groove 12Bo is made smaller than the groove width W1b of the inner shoulder circumferential groove 12Bi, but may be equal to the groove width W1b of the inner shoulder circumferential groove 12Bi.

[Land portion]

The plurality of land portions 13 are demarcated by the plurality of circumferential grooves 12. In the present embodiment, the plurality of land portions 13 include a center land portion 13A, a pair of middle land portions 13B, 13B, and a pair of shoulder land portions 13C, 13C. However, the present disclosure is not limited thereto. For example, depending on the running performance or the like required of the tire 1, the plurality of land portions 13 may be composed of a pair of the center land portions 13A, 13A and the pair of shoulder land portions 13C, 13C.

The center land portion 13A is demarcated by the pair of center circumferential grooves 12A, 12A (the inner center circumferential groove 12Ai and the outer center circumferential groove 12Ao). Accordingly, the center land portion 13A is disposed on the tire equator C. The pair of middle land portions 13B, 13B are respectively demarcated by the pair of center circumferential grooves 12A, 12A and the pair of shoulder circumferential grooves 12B, 12B. In a case where the tread portion 2 has a designated mounting direction to a vehicle as in the present embodiment, the pair of middle land portions 13B, 13B include an inner middle land portion 13Bi disposed on the vehicle inner side Vi and an outer middle land portion 13Bo disposed on the vehicle outer side Vo. The pair of shoulder land portions 13C, 13C are demarcated on the outer side with respect to the pair of shoulder circumferential grooves 12B, 12B in the tire axial direction, and include the tread ends (the inner tread end 2ti and the outer tread end 2to in the present example). In a case where the tread portion 2 has a designated mounting direction to a vehicle as in the present embodiment, the pair of shoulder land portions 13C, 13C include an inner shoulder land portion 13Ci disposed on the vehicle inner side Vi and an outer shoulder land portion 13Co disposed on the vehicle outer side Vo.

[Carcass]

The carcass 6 extends between a pair of bead portions 4, 4. The carcass 6 is formed so as to include at least one carcass ply 6A (one carcass ply 6A in the present example). The carcass ply 6A includes, for example, a body portion 6a and a pair of turned-up portions 6b, 6b. For example, the body portion 6a extends between the pair of bead portions 4, 4. For example, the turned-up portions 6b, 6b are contiguous with the body portion 6a and are turned up around bead cores 5, 5 from the inner side to the outer side in the tire axial direction.

The carcass ply 6A is formed so as to include a plurality of carcass cords (not shown) and a topping rubber (not shown) covering the carcass cords. For the carcass cords, for example, organic fiber cords formed of aramid, rayon, or the like, are adopted. For example, the carcass cords are preferably arranged at an angle of 70 to 90° with respect to the tire circumferential direction.

[Belt layer]

The belt layer 7 of the present embodiment is disposed outward of the carcass 6 in the tire radial direction and inside the tread portion 2. The belt layer 7 of the present embodiment is composed of two belt plies 7A, 7B stacked in the tire radial direction.

The belt plies 7A, 7B of the present embodiment include, for example, belt cords (not shown) arranged so as to be inclined at an angle of 10 to 35 degrees with respect to the tire circumferential direction. The belt plies 7A, 7B are overlapped such that the belt cords thereof intersect each other. For the belt cords, for example, a material such as steel, aramid, or rayon can be suitably adopted.

[Band layer]

The band layer 9 is disposed outward of the belt layer 7 in the tire radial direction. The band layer 9 is formed so as to include a band ply 9A in which band cords (not shown) are arranged in the tire circumferential direction. The growth of the outer diameter of the tire 1 is suppressed by such a band layer 9 (band ply 9A), thereby improving high-speed durability. From such a viewpoint of effectively suppressing the growth of the outer diameter, the band cord is preferably wound helically at an angle of 5° or less with respect to the tire circumferential direction, for example.

For the band cord (not shown), for example, an organic fiber cord can be adopted. Examples of the organic fiber cord include a nylon fiber cord. For the band cord of the present embodiment, a hybrid cord formed by twisting an aramid fiber cord (aramid fiber strand) and a nylon fiber cord (nylon fiber strand) is adopted. Such a band cord, for example, has a higher modulus compared to a conventional band cord formed of a nylon fiber cord, and thus, the high restraining force of the band cord suppresses the movement of the belt layer 7. Accordingly, an increase in strain in the tread portion 2 during high-speed running is suppressed, so that heat generation in the tread portion 2 can be suppressed. Therefore, damage such as cord looseness (e.g., damage in which a carcass cord, a belt cord, or a band cord separates from the rubber) due to temperature rise in the tread portion 2 is prevented, thereby improving high-speed durability. Furthermore, the secondary cross-sectional resonance peak can be shifted away from the vehicle resonance, so that road noise can be reduced. The thickness of the band cord and the thickness of each strand can be set appropriately, depending on the restraining force required of the band layer 9.

[Sound damper]

The sound damper 11 is fixed to a tire inner cavity surface 15s of the tread portion 2. The sound damper 11 extends in the tire circumferential direction along the tire equator C. In the present embodiment, the center position (not shown) in the tire axial direction of the sound damper 11 is approximately aligned with the tire equator C. This approximate alignment includes a case where the distance in the tire axial direction (not shown) between the center position and the tire equator C is 5% or less of the maximum ground-contact width W.

The sound damper 11 of the present embodiment is formed in a long belt shape and has a bottom surface fixed to the tire inner cavity surface 15s. In addition, the sound damper 11 may be formed in an approximately annular shape by abutting together a pair of outer end portions (not shown) on both sides in the tire circumferential direction of the sound damper 11. The sound damper 11 is not limited to a mode in which the pair of outer end portions are abutted against each other, and, for example, the pair of outer end portions may be spaced apart from each other in the tire circumferential direction.

The sound damper 11 may have substantially the same cross-sectional shape at each position in the tire circumferential direction, except for the pair of outer end portions (not shown) in the tire circumferential direction. This facilitates the manufacturing of the sound damper 11 and can reduce manufacturing costs.

The sound damper 11 is made of a porous material. Such a sound damper 11 can attenuate and absorb resonant sound energy generated inside the tire inner cavity 15 during running, through the pores (cells) in the surface of and inside the porous material. Thus, cavity resonance can be effectively suppressed in the tire 1 of the present embodiment. Further, the sound damper 11 can attenuate the impact received from the tread portion 2 during running and can reduce road noise. Therefore, the tire 1 of the present embodiment improves vehicle interior quietness.

In the present embodiment, since the center position in the tire axial direction of the sound damper 11 is approximately aligned with the tire equator C, on the tire equator C side on which the impact received from the tread portion 2 becomes relatively greater, the impact can be effectively attenuated by the sound damper 11. Furthermore, since the sound damper 11 of the present embodiment is formed in an approximately annular shape, the resonant sound energy generated inside the tire inner cavity 15 during running can be effectively attenuated and absorbed, over the entire circumference in the tire circumferential direction.

The porous material forming the sound damper 11 is easily deformed, for example, contracted or bent, and thus the sound damper 11 can readily follow strain in the tire inner cavity surface 15s during running. This improves the durability of the sound damper 11 and maintains quietness.

For the porous material, a material similar to those of conventional sound dampers can be adopted. Examples of the porous material of the present embodiment include a porous sponge material. The sponge material is a sponge-like porous structure. In addition, examples of the sponge material include, in addition to so-called sponges made by foaming rubber or synthetic resin, materials formed by intertwining and integrally bonding animal fibers, plant fibers, synthetic fibers, and the like.

Examples of the sponge material include synthetic resin sponges such as an ether-based polyurethane sponge, an ester-based polyurethane sponge, and a polyethylene sponge, and chloroprene rubber sponges (CR sponges). Other examples of the sponge material include an ethylene propylene rubber sponge (EDPM sponge) and a nitrile rubber sponge (NBR sponge). In particular, sponges, such as a polyurethane-based sponge and a polyethylene-based sponge, including the ether-based polyurethane sponge are preferable, from the viewpoints of sound-damping properties (vehicle interior quietness), light weight, foam adjustability, durability, etc.

The preferable density of the sound damper 11 is 15 to 35 kg/m$^3$. When the density is 15 kg/m$^3$ or higher, the resonant sound energy generated during running can be effectively attenuated and absorbed by the sound damper 11, thereby improving quietness. From such a viewpoint of further improving quietness, the density is preferably 17 kg/m$^3$ or higher and more preferably 20 kg/m$^3$ or higher. Meanwhile, when the density is 35 kg/m$^3$ or lower, the heat transmitted from the tread portion 2 which tends to generate heat during high-speed running, can be suppressed from being accumulated in the sound damper 11. Thus, damage such as cord looseness due to temperature rise in the tread portion 2 is prevented, so that high-speed durability is improved. From such a viewpoint of further improving high-speed durability, the density is preferably 33 kg/m$^3$ or lower and more preferably 30 kg/m$^3$ or lower, in the combination with any of the aforementioned lower limit values.

[Ground-contact surface]

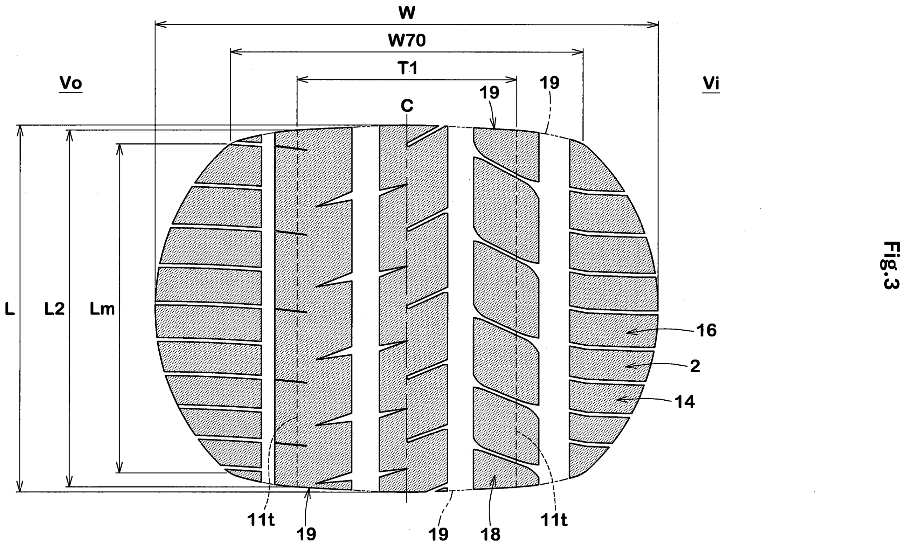

FIG. 3 shows an example of a footprint 16 of the tread portion 2 in the 70% load-applied state. In FIG. 3, the positions obtained by projecting both end portions 11t, 11t in the tire axial direction of the sound damper 11 shown in FIG. 2 onto the ground-contact surface 14, are indicated by broken lines.

In the 70% load-applied state, the ground-contact surface 14 of the tread portion 2 of the present embodiment has a ratio L/Lm of a maximum ground-contact length L in the tire circumferential direction to a ground-contact length Lm, in the tire circumferential direction, within a range centered on the tire equator C and equal to or less than 70% of the maximum ground-contact width W in the tire axial direction, and the ratio L/Lm satisfies the following formula (1). In a case where the circumferential groove 12, a lateral groove (not shown), or the like is located within the range equal to or less than 70% of the maximum ground-contact width W, the ground-contact length Lm can be specified using virtual ground-contact end edges 19, 19 (indicated by alternate long and two short dashes lines) obtained by smoothly connecting the groove edges thereof.

$$1.00 < L/Lm < 1.10 \;\ldots(1)$$

The shape of the ground-contact surface 14 (footprint 16) in which the above formula (1) is satisfied can be adjusted appropriately. Examples of such adjustment include changing the thickness of the tread rubber 2G shown in FIG. 1, and changing the components (the carcass 6, the belt layer 7, the band layer 9, and the like) having well-known structures and embedded inside the tread portion 2.

As shown in FIG. 2, in a region 18 within the range (denoted by a reference character "W70") centered on the tire equator C and equal to or less than 70% of the maximum ground-contact width W in the tire axial direction, the sound damper 11 is fixed to the tire inner cavity surface 15s on the inner side in the tire radial direction. Further, in the region 18, there is also a tendency for ground-contact pressure to increase during high-speed running.

As shown in FIG. 3, in the tire 1 of the present embodiment, since the ratio L/Lm satisfies the above formula (1) in the 70% load-applied state, the ground-contact end edges 19, 19 on both sides in the tire circumferential direction extend substantially in a straight line along the tire axial direction in the region 18. Thus, the ground-contact pressure in the region 18 becomes more uniform.

On the other hand, in a conventional tire in which the ratio L/Lm does not satisfy the above formula (1) (i.e., 1.10 or more) in the 70% load-applied state, compared to the tire 1 of the present embodiment, the ground-contact length Lm in the tire circumferential direction decreases from the tire equator C toward the outer side in the tire axial direction. Thus, the ground-contact end edges 19, 19 on both sides in the tire circumferential direction are inclined with respect to the tire axial direction. In such a conventional tire, the ground-contact pressure on the tire equator C side in the region 18 relatively increases, so that the ground-contact pressure becomes ununiform. This ununiform ground-contact pressure tends to cause localized large strain in the tread portion 2 and to increase heat generation during high-speed running.

As described above, the ground-contact pressure in the region 18 of the tire 1 of the present embodiment is more uniform, compared to that of the conventional tire (not shown). Thus, compared to the conventional tire, the tire 1 of the present embodiment suppresses strain in the tread portion 2 from locally increasing during high-speed running, so that heat generation in the tread portion 2 can be suppressed. Furthermore, since heat generation in the tread portion 2 is suppressed in the tire 1 of the present embodiment, heat accumulation in the sound damper 11 shown in FIG. 2 can also be suppressed. Thus, due to the synergistic effect of suppressing heat generation in the tread portion 2 and suppressing heat accumulation in the sound damper 11, in the tire 1 of the present embodiment, damage such as cord looseness can be effectively prevented from being caused by temperature rise in the tread portion 2. Therefore, the tire 1 of the present embodiment improves high-speed durability while maintaining quietness, and thus good quietness and high-speed durability can be expected. In order to effectively enhance such effects, the ratio L/Lm described with reference to FIG. 3 is preferably 1.08 or less, and more preferably 1.06 or less.

As described above, in the tire 1 of the present embodiment, for the band cord of the band ply 9A shown in FIG. 2, the above-described hybrid cord is adopted, thereby suppressing movement of the belt layer 7 and reducing road noise. Therefore, due to the synergistic effect that the hybrid cord is adopted and that the ratio L/Lm described with reference to FIG. 3 satisfies the above formula (1), the tire 1 of the present embodiment can further improve quietness and high-speed durability.

In addition, in the tire 1 of the present embodiment, since the density of the sound damper 11 shown in FIG. 2 is set within the above-described range, heat accumulation in the sound damper 11 is suppressed while resonant sound energy during running is effectively attenuated and absorbed. Therefore, due to the synergistic effect that the density of the sound damper 11 is set as described above and that the ratio L/Lm described with reference to FIG. 3 satisfies the above formula (1), the tire 1 of the present embodiment can further improve quietness and high-speed durability.

Further, in the 70% load-applied state, the ground-contact surface 14 has a ratio L/L2 of the maximum ground-contact length L in the tire circumferential direction to a ground-contact length L2 in the tire circumferential direction at each of the positions obtained by projecting the both end portions 11t, 11t in the tire axial direction of the sound damper 11 onto the ground-contact surface 14, and the ratio L/L2 preferably satisfies the following formula (2). In the case where the circumferential groove 12, the lateral groove (not shown), or the like is located at the positions obtained by projecting the both end portions 11t, 11t, the ground-contact length L2 can be specified using the virtual ground-contact end edges 19, 19 (indicated by the alternate long and two short dashes lines) obtained by smoothly connecting the groove edges thereof.

$$1.00 < L/L2 < 1.10 \ldots(2)$$

Since the ratio L/L2 satisfies the above formula (2), in a region (hereinafter, sometimes referred to as "projected region") T1 obtained by projecting the sound damper 11 onto the outer surface (ground-contact surface 14) of the tread portion 2, the ground-contact end edges 19, 19 on both sides in the tire circumferential direction extend substantially in a straight line along the tire axial direction. Thus, in the projected region T1 in which the sound damper 11 is disposed, the ground-contact pressure becomes more uniform, and heat generation in the tread portion 2 during high-speed running is suppressed, so that heat accumulation in the sound damper 11 can be effectively suppressed. Therefore, the tire 1 of the present embodiment improves high-speed durability while maintaining good quietness. In order to effectively enhance such effects, the ratio L/L2 is preferably 1.08 or less, more preferably 1.06 or less, and further preferably 1.03 or less.

The land ratio in the projected region (i.e., the region obtained by projecting the sound damper 11 onto the outer surface of the tread portion 2) T1 shown in FIG. 2 is preferably smaller than the land ratio in the entirety of the tread portion 2. Here, the "land ratio in the projected region T1" is determined by dividing the actual area of the ground-contact surface 14 within the projected region T1 by the virtual area of the ground-contact surface 14, which is obtained by filling all the grooves located within the projected region T1, over the entire circumference in the tire circumferential direction. In addition, the "land ratio in the entirety of the tread portion 2" is determined by dividing the actual area of the ground-contact surface 14 between the pair of tread ends (the inner tread end 2ti and the outer tread end 2to) by the virtual area of the ground-contact surface 14, which is obtained by filling all the grooves located in the ground-contact surface 14 between the pair of tread ends (the inner tread end 2ti and the outer tread end 2to), over the entire circumference in the tire circumferential direction.

Since the land ratio in the projected region T1 is set to be smaller than the land ratio in the entirety of the tread portion 2, the rubber volume of the tread rubber 2G within the projected region T1 is relatively smaller. Thus, heat generation during high-speed running in the projected region T1 in which the sound damper 11 is disposed can be suppressed. Furthermore, since heat generation in the projected region T1 is suppressed, heat accumulation in the sound damper 11 can also be suppressed. Therefore, the tire 1 of the present embodiment improves the high-speed durability while maintaining good quietness. In order to effectively exhibit such effects, the land ratio in the projected region T1 is preferably 90% or less of the land ratio in the entirety of the tread portion 2. On the other hand, if the land ratio in the projected region T1 is smaller than necessary, it may become difficult to maintain traction performance and steering stability. From such a viewpoint, the land ratio in the projected region T1 is preferably 70% or more of the land ratio in the entirety of the tread portion 2, in the combination with any of the aforementioned upper limit values.

The pair of center circumferential grooves 12A, 12A (the inner center circumferential groove 12Ai and the outer center circumferential groove 12Ao) of the present embodiment continuously extend in the tire circumferential direction in the projected region T1. Meanwhile, the pair of shoulder circumferential grooves 12B, 12B (the inner shoulder circumferential groove 12Bi and the outer shoulder circumferential groove 12Bo) continuously extend in the tire circumferential direction, on both outer sides with respect to the projected region T1 in the tire axial direction. As shown in FIG. 1, the total of the groove widths W1a, W1a of the pair of center circumferential grooves 12A, 12A is preferably larger than the total of the groove widths W1b, W1b of the pair of shoulder circumferential grooves 12B, 12B.

Since the total of the groove widths W1a, W1a is larger than the total of the groove widths W1b, W1b, the rubber volume of the tread rubber 2G in the projected region T1 shown in FIG. 2 is smaller than the rubber volume of the tread rubber 2G on both outer sides with respect to the projected region T1 in the tire axial direction. Thus, heat generation during high-speed running in the projected region T1 can be suppressed. Furthermore, since heat generation in the projected region T1 is suppressed, heat accumulation in the sound damper 11 can also be suppressed. Therefore, the tire 1 of the present embodiment improves high-speed durability while maintaining good quietness. In order to effectively exhibit such effects, as shown in FIG. 1, the total of the groove widths W1a, W1a is preferably 1.1 times or more than the total of the groove widths W1b, W1b.

On the other hand, if the total of the groove widths W1a, W1a of the pair of center circumferential grooves 12A, 12A (the inner center circumferential groove 12Ai and the outer center circumferential groove 12Ao) is larger than necessary, it may become difficult to maintain traction performance and steering stability. From such a viewpoint, the total of the groove widths W1a, W1a is preferably 1.5 times or less than the total of the groove widths W1b, W1b, in the combination with any of the aforementioned lower limit values.

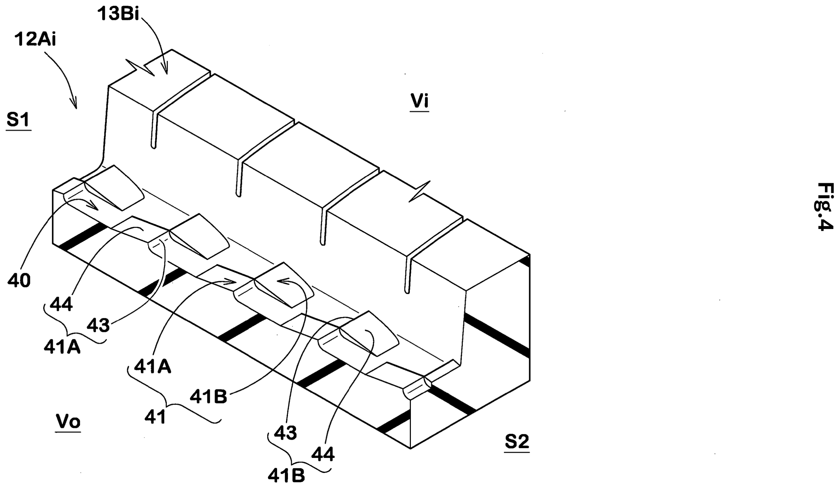

As shown in FIG. 2, at least one protrusion 41 protruding in the tire radial direction is preferably formed on a groove bottom portion 40 of the center circumferential groove 12A (each of the inner center circumferential groove 12Ai and the outer center circumferential groove 12Ao in the present example). FIG. 4 is an enlarged perspective view showing an example of the protrusions 41. In FIG. 4, the protrusion 41 formed in the inner center circumferential groove 12Ai is representatively shown.

As shown in FIG. 4, the protrusions 41 protrude outward in the tire radial direction from the groove bottom portion 40 of the center circumferential groove 12A (each of the inner center circumferential groove 12Ai and the outer center circumferential groove 12Ao in the present example). Due to such protrusions 41, the surface areas of the groove bottom portions 40 of the center circumferential grooves 12A increase, and thus, during high-speed running, heat accumulated in the sound damper 11 shown in FIG. 2 can be effectively dissipated (released) from the groove bottom portions 40 (protrusions 41) of the center circumferential grooves 12A. Therefore, the tire 1 of the present embodiment improves high-speed durability. Furthermore, air passing through the center circumferential grooves 12A can be disturbed. Therefore, the tire 1 of the present embodiment reduces air-column resonance noise and improves quietness.

The protrusions 41 of the present embodiment are each formed so as to include a first protrusion 41A and a second protrusion 41B. The first protrusion 41A and the second protrusion 41B are adjacent to each other in the tire axial direction, in the center circumferential groove 12A (the inner center circumferential groove 12Ai in FIG. 4).

The first protrusion 41A and the second protrusion 41B are each formed so as to include a first surface 43 and a second surface 44. The first surface 43 extends in the tire radial direction. The second surface 44 is disposed on the opposite side in the tire circumferential direction with respect to the first surface 43, and extends at a greater angle with respect to the tire radial direction than that of the first surface 43.

The first protrusion 41A has the second surface 44 facing one side S1 in the tire circumferential direction and the first surface 43 facing another side S2 in the tire circumferential direction. Meanwhile, the second protrusion 41B has the first surface 43 facing the one side S1 in the tire circumferential direction and the second surface 44 facing the other side S2 in the tire circumferential direction. Thus, since the orientations of the first surface 43 and the second surface 44 of each of the first protrusion 41A and the second protrusion 41B are different from each other in the tire circumferential direction, the air in the center circumferential grooves 12A (the inner center circumferential groove 12Ai and the outer center circumferential groove 12Ao in the present example) can be effectively disturbed. Thus, air-column resonance noise can be reduced while heat accumulated in the sound damper 11 is effectively dissipated (released). Such protrusions 41 can be formed, for example, based on the description in Japanese Laid-Open Patent Publication No. 2020-196281. Further, the protrusions 41 may be formed in not only the center circumferential grooves 12A but also the shoulder circumferential grooves 12B (the inner shoulder circumferential groove 12Bi and the outer shoulder circumferential groove 12Bo) shown in FIG. 2. This can effectively reduce air-column resonance noise.

As shown in FIG. 1, in the tire meridional cross section in the standardized state, a cross-sectional area A1 of the sound damper 11 is preferably set to 5% to 15% of a cross-sectional area A2 of the tire inner cavity 15. Here, the cross-sectional area A1 of the sound damper 11 is the area defined, in the standardized state, based on the outer shape including the cavity cells of the sound damper 11. In addition, the cross-sectional area A2 of the tire inner cavity 15 is the area of the space enclosed by the tire inner cavity surface 15s of the tire 1 in the standardized state and the outer surface 10s of the rim (standardized rim) 10. These cross-sectional areas can be easily obtained, for example, from measurement results using CT scanning, or the like.

Since the cross-sectional area A1 of the sound damper 11 is set to be 5% or more of the cross-sectional area A2 of the tire inner cavity 15, the resonant sound energy generated inside the tire inner cavity 15 can be effectively attenuated and absorbed by the sound damper 11. Thus, the tire 1 of the present embodiment improves vehicle interior quietness. From such a viewpoint of further improving quietness, the cross-sectional area A1 of the sound damper 11 is preferably 6% or more and more preferably 7% or more of the cross-sectional area A2 of the tire inner cavity 15. Meanwhile, since the cross-sectional area A1 of the sound damper 11 is set to be 15% or less of the cross-sectional area A2 of the tire inner cavity 15, the sound damper 11 is prevented from becoming larger than necessary. Thus, the tire 1 of the present embodiment prevents heat accumulation in the sound damper 11 from increasing, and improves high-speed durability. Furthermore, increases in cost and weight of the sound damper 11 can be suppressed. From the viewpoint of effectively exhibiting such effects, the cross-sectional area A1 of the sound damper 11 is preferably 12% or less and more preferably 10% or less of the cross-sectional area A2 of the tire inner cavity 15, in the combination with any of the aforementioned lower limit values.

As shown in FIG. 2, in the tire meridional cross section, the cross-sectional shape of the sound damper 11 is preferably formed in a flattened, laterally elongated shape (a laterally elongated rectangular shape in the present embodiment) in which a maximum thickness D3 in the tire radial direction is smaller than a maximum width W3 in the tire axial direction. The maximum width W3 and the maximum thickness D3 are specified in the standardized state.

The sound damper 11 formed in a flattened, laterally elongated shape can effectively prevent tipping and strain during running with the tire. Thus, the tire 1 of the present embodiment can maintain quietness and high-speed durability during running. Furthermore, the manufacturing of the sound damper 11 becomes easier, so that the manufacturing cost can be reduced. In order to effectively exhibit such effects, the maximum thickness D3 is preferably 15% to 45% of the maximum width W3 and more preferably 20% to 40% of the maximum width W3.

The maximum width W3 in the tire axial direction of the sound damper 11 is preferably set to 25% to 55% of the maximum ground-contact width W. Since the maximum width W3 is set to 25% or more of the maximum ground-contact width W, the sound damper 11 is positioned so as to extend over a wide range in the tire axial direction of the tire inner cavity surface 15s, thereby attenuating cavity resonance and impact from the tread portion 2 and improving vehicle interior quietness. From such a viewpoint of improving quietness, the maximum width W3 is preferably 26% or more of the maximum ground-contact width W. Meanwhile, since the maximum width W3 is set to 55% or less of the maximum ground-contact width W, the positioning of the sound damper 11 so as to extend in an unnecessarily wide range in the tire axial direction can be suppressed. Thus, heat accumulation in the sound damper 11 is suppressed from increasing, and high-speed durability is improved. From such a viewpoint, the maximum width W3 is preferably 48% or less and more preferably 40% or less of the maximum ground-contact width W, in the combination with any of the aforementioned lower limit values.

[Tread pattern]

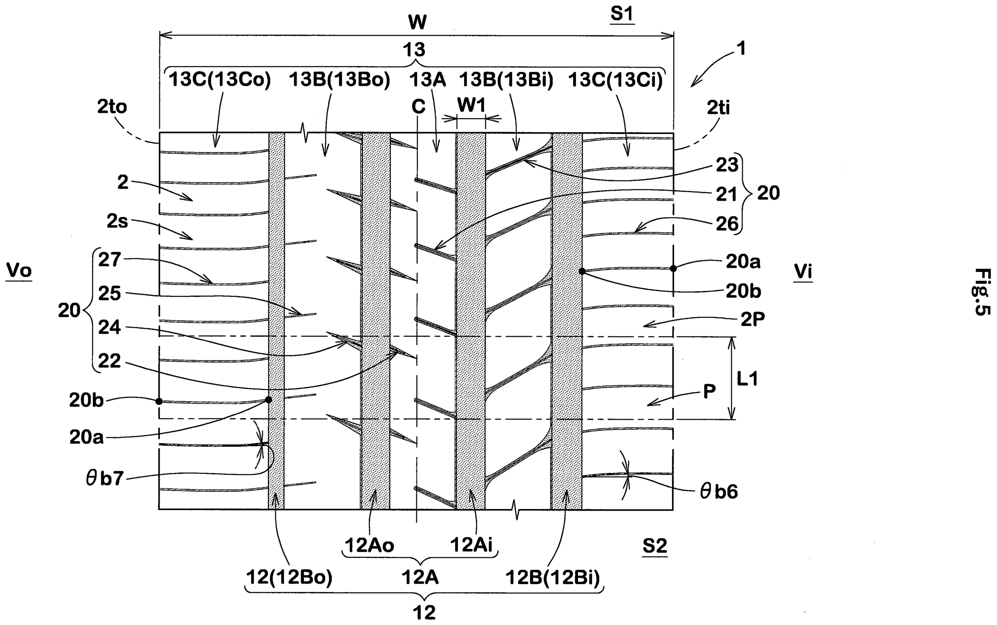

FIG. 5 is a development view showing an example of the tread portion 2 of the tire 1 shown in FIG. 1. In FIG. 5, the above-described protrusions 41 (shown in FIG. 4) are omitted.

The tread portion 2 of the present embodiment has a tread pattern 2P in which one-pitch regions P each constituting a pattern constituent unit are arranged in the tire circumferential direction. As long as the one-pitch regions P share a common pattern, for example, a plurality of the one-pitch regions P having the same length in the tire circumferential direction may be arranged, or multiple types of the one-pitch regions P having different lengths in the tire circumferential direction may be arranged randomly. A length L1 in the tire circumferential direction of each one-pitch region P is set to, for example, 19 to 36 mm.

It is preferable that, in the tread pattern 2P, multiple types of the one-pitch regions P having different lengths L1 in the tire circumferential direction are arranged in the tire circumferential direction. Thus, the natural frequency between the one-pitch regions P is varied, so that noise performance (quietness) is improved. In order to effectively enhance such effects, it is preferable to provide 2 to 10 types of the one-pitch regions P.

[Plurality of groove-shaped portions]

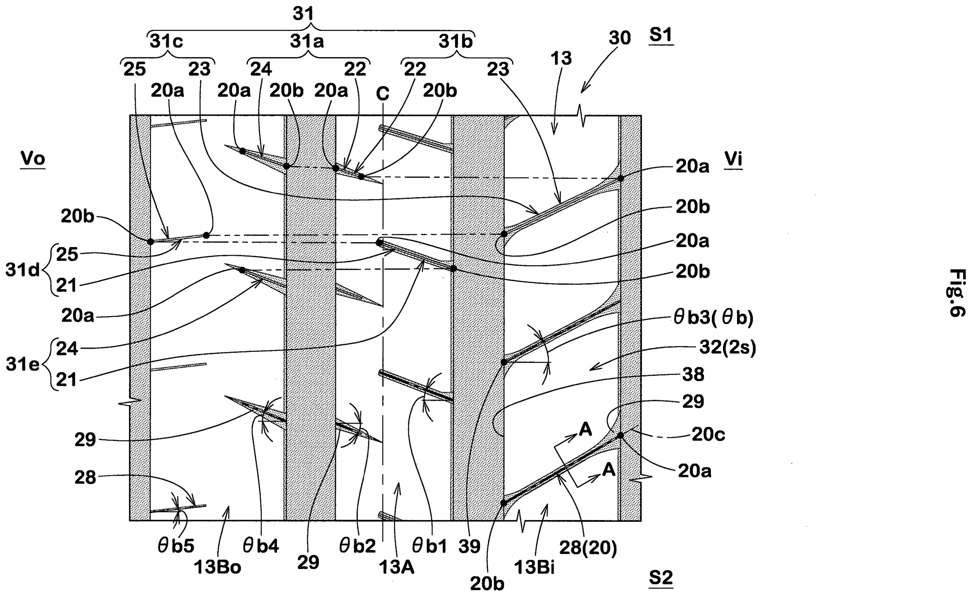

In the present embodiment, a plurality of groove-shaped portions 20 inclined with respect to the tire axial direction are formed on each of the plurality of land portions 13. With the plurality of groove-shaped portions 20, wet performance is improved. FIG. 6 is a partially enlarged view showing the center land portion 13A, the inner middle land portion 13Bi, and the outer middle land portion 13Bo in FIG. 5.

As shown in FIG. 6, each of the plurality of groove-shaped portions 20 has a first end 20a on the one side S1 in the tire circumferential direction, and a second end 20b on the other side S2 in the tire circumferential direction. In the present embodiment, the first end 20a and the second end 20b are respectively specified at the ends of a groove center line 20c extending along the longitudinal direction of the groove-shaped portion 20. In a case where chamfered portions 29 are provided as in the groove-shaped portion 20 of the present embodiment, the first end 20a and the second end 20b are specified excluding the chamfered portions 29 (based only on a sipe body 28 in the present example).

In the present embodiment, the plurality of groove-shaped portions (the groove-shaped portions formed on the center land portion 13A, the inner middle land portion 13Bi, and the outer middle land portion 13Bo in the present example) 20 each include the sipe body 28 having a width (i.e., a width orthogonal to the longitudinal direction thereof) of 2 mm or less. The sipe body 28 of the present embodiment is formed in a slit-like shape. Due to the plurality of groove-shaped portions 20 (the sipe bodies 28), the stiffness of the land portion 13 is suppressed from decreasing when the tire comes into contact with a road surface, although edge components are formed on the tread portion 2. Thus, steering stability can be improved.

The present disclosure is not limited to a mode in which the groove-shaped portion 20 includes the sipe body 28, and for example, the groove-shaped portion 20 may include a groove body portion (not shown) having a width (i.e., a width orthogonal to the longitudinal direction thereof) of more than 2 mm. With such a groove body portion, wet performance is improved. In addition, the depth (not shown) of the groove-shaped portion 20 is set to, for example, 2 to 8 mm.

As shown in FIG. 5, the plurality of groove-shaped portions 20 of the present embodiment include a plurality of first groove-shaped portions 21, a plurality of second groove-shaped portions 22, a plurality of third groove-shaped portions 23, a plurality of fourth groove-shaped portions 24, a plurality of fifth groove-shaped portions 25, a plurality of sixth groove-shaped portions 26, and a plurality of seventh groove-shaped portions 27. The present disclosure is not limited to a mode in which the plurality of groove-shaped portions 20 include all of the first to seventh groove-shaped portions 21 to 27. For example, depending on the performance or the like required of the tire 1, some of these portions may be omitted, or another groove-shaped portion (not shown) may be included in the groove-shaped portions 20.

The plurality of first groove-shaped portions 21 and the plurality of second groove-shaped portions 22 are formed on the center land portion 13A. In the present embodiment, the plurality of first groove-shaped portions 21 are disposed on the vehicle inner side Vi in the center land portion 13A. Meanwhile, the plurality of second groove-shaped portions 22 are disposed on the vehicle outer side Vo in the center land portion 13A. The present disclosure is not limited to a mode in which the first groove-shaped portions 21 and the second groove-shaped portions 22 are formed on the center land portion 13A. For example, some of the portions may be omitted, or another groove-shaped portion (not shown) may be included in the center land portion 13A.

The plurality of third groove-shaped portions 23 are formed on the inner middle land portion 13Bi. The present invention is not limited to a mode in which only the third groove-shaped portions 23 are formed on the inner middle land portion 13Bi. For example, another groove-shaped portion (not shown) may be included in the inner middle land portion 13Bi.

The plurality of fourth groove-shaped portions 24 and the plurality of fifth groove-shaped portions 25 are formed on the outer middle land portion 13Bo. In the present embodiment, the plurality of fourth groove-shaped portions 24 are disposed on the vehicle inner side Vi in the outer middle land portion 13Bo. Meanwhile, the plurality of fifth groove-shaped portions 25 are disposed on the vehicle outer side Vo in the outer middle land portion 13Bo. The present disclosure is not limited to a mode in which the fourth groove-shaped portions 24 and the fifth groove-shaped portions 25 are formed on the outer middle land portion 13Bo. For example, some of the portions may be omitted, or another groove-shaped portion (not shown) may be included in the outer middle land portion 13Bo.

The plurality of sixth groove-shaped portions 26 are formed on the inner shoulder land portion 13Ci. The present disclosure is not limited to a mode in which only the sixth groove-shaped portions 26 are formed on the inner shoulder land portion 13Ci. For example, another groove-shaped portion (not shown) may be included in the inner shoulder land portion 13Ci.

The plurality of seventh groove-shaped portions 27 are formed on the outer shoulder land portion 13Co. The present disclosure is not limited to a mode in which only the seventh groove-shaped portions 27 are formed on the outer shoulder land portion 13Co. For example, another groove-shaped portion (not shown) may be included in the outer shoulder land portion 13Co.

[Arrangement rule]

As shown in FIG. 6, the plurality of groove-shaped portions 20 of the present embodiment are arranged over one full circumference in the tire circumferential direction, based on a predetermined arrangement rule 30. The arrangement rule 30 of the present embodiment applies to the plurality of groove-shaped portions 20 arranged in the center land portion 13A and the pair of middle land portions 13B (the inner middle land portion 13Bi and the outer middle land portion 13Bo). However, the present disclosure is not limited thereto. For example, only these land portions 13, which are some of the land portions 13, may be subject to the arrangement rule 30, or the other land portions 13 (the pair of shoulder land portions 13C shown in FIG. 1) may be subject to the arrangement rule 30.

In the arrangement rule 30, regarding all pairs 31 composed of the groove-shaped portions 20 adjacent to each other in the tire circumferential direction, among the plurality of groove-shaped portions 20, the first end 20a of the groove-shaped portion 20 corresponding to one of each pair 31 and the second end 20b of the groove-shaped portion 20 corresponding to the other of each pair 31 are formed at the same position in the tire circumferential direction. In addition, the groove-shaped portions 20 forming the pair 31 are formed either on the same land portion 13 or on different land portions 13.

Here, whether or not the first end 20a of the groove-shaped portion 20 corresponding to one of the pair 31 and the second end 20b of the groove-shaped portion 20 corresponding to the other of the pair 31 are at the same position in the tire circumferential direction, is determined using the groove center lines 20c thereof.

That is, the first end 20a of the groove-shaped portion 20 corresponding to one of the pair 31 and the second end 20b of the groove-shaped portion 20 corresponding to the other of the pair 31 are respectively specified at the ends of the groove center line 20c. However, in consideration of the characteristics of the tire 1 as a vulcanized rubber product and from the viewpoint of allowing manufacturing tolerance, the "same position" includes a mode in which the first end 20a and the second end 20b are slightly offset in the tire circumferential direction. In this case, the distance in the tire circumferential direction between the first end 20a and the second end 20b is 5% or less, preferably 3% or less, and more preferably 1% or less of the total length in the tire circumferential direction of the two groove-shaped portions 20 forming the pair 31. It is most preferable for the first end 20a and the second end 20b not to be offset (e.g., to be offset by less than 0.1%) in the tire circumferential direction.

The pairs 31 of the present embodiment include a first pair 31a, a second pair 31b, a third pair 31c, a fourth pair 31d, and a fifth pair 31e. Some of these pairs 31 may be omitted, and another pair may be included in the pairs 31. The groove-shaped portions 20 forming the pair 31 of the present embodiment are formed on the land portions 13 different from each other.

The first pair 31a is composed of the fourth groove-shaped portion 24 and the second groove-shaped portion 22, which is adjacent to the fourth groove-shaped portion 24 and is located on the other side S2 in the tire circumferential direction. In the present embodiment, the fourth groove-shaped portion 24 is formed on the outer middle land portion 13Bo, and the second groove-shaped portion 22 is formed on the center land portion 13A. Therefore, the groove-shaped portions 20 forming the first pair 31a are formed on the land portions 13 different from each other. In addition, the first end 20a of the second groove-shaped portion 22 and the second end 20b of the fourth groove-shaped portion 24 of the first pair 31a are formed at the same position in the tire circumferential direction.

The second pair 31b is composed of the second groove-shaped portion 22 and the third groove-shaped portion 23, which is adjacent to the second groove-shaped portion 22 and is located on the other side S2 in the tire circumferential direction. In the present embodiment, the second groove-shaped portion 22 is formed on the center land portion 13A, and the third groove-shaped portion 23 is formed on the inner middle land portion 13Bi. Therefore, the groove-shaped portions 20 forming the second pair 31b are formed on the land portions 13 different from each other, similar to the first pair 31a. In addition, the first end 20a of the third groove-shaped portion 23 and the second end 20b of the second groove-shaped portion 22 of the second pair 31b are formed at the same position in the tire circumferential direction.

The third pair 31c is composed of the third groove-shaped portion 23 and the fifth groove-shaped portion 25, which is adjacent to the third groove-shaped portion 23 and is located on the other side S2 in the tire circumferential direction. In the present embodiment, the third groove-shaped portion 23 is formed on the inner middle land portion 13Bi, and the fifth groove-shaped portion 25 is formed on the outer middle land portion 13Bo. Therefore, the groove-shaped portions 20 forming the third pair 31c are formed on the land portions 13 different from each other, similar to the first pair 31a and the second pair 31b. In addition, the first end 20a of the fifth groove-shaped portion 25 and the second end 20b of the third groove-shaped portion 23 of the third pair 31c are formed at the same position in the tire circumferential direction.

The fourth pair 31d is composed of the fifth groove-shaped portion 25 and the first groove-shaped portion 21, which is adjacent to the fifth groove-shaped portion 25 and is located on the other side S2 in the tire circumferential direction. In the present embodiment, the fifth groove-shaped portion 25 is formed on the outer middle land portion 13Bo, and the first groove-shaped portion 21 is formed on the center land portion 13A. Therefore, the groove-shaped portions 20 forming the fourth pair 31d are formed on the land portions 13 different from each other, similar to the first to third pairs 31a to 31c. In addition, the first end 20a of the first groove-shaped portion 21 and the second end 20b of the fifth groove-shaped portion 25 of the fourth pair 31d are formed at the same position in the tire circumferential direction.

The fifth pair 31e is composed of the first groove-shaped portion 21 and the fourth groove-shaped portion 24, which is adjacent to the first groove-shaped portion 21 and is located on the other side S2 in the tire circumferential direction. In the present embodiment, the first groove-shaped portion 21 is formed on the center land portion 13A, and the fourth groove-shaped portion 24 is formed on the outer middle land portion 13Bo. Therefore, the groove-shaped portions 20 forming the fifth pair 31e are formed on the land portions 13 different from each other, similar to the first to fourth pairs 31a to 31d. In addition, the first end 20a of the fourth groove-shaped portion 24 and the second end 20b of the first groove-shaped portion 21 of the fifth pair 31e are formed at the same position in the tire circumferential direction.

In the present embodiment, the first to fifth pairs 31a to 31e form the one-pitch region P shown in FIG. 5, and the first to fifth pairs 31a to 31e are repeated in sequence. Thus, in the arrangement rule 30 of the present embodiment, the groove-shaped portions 20 forming each pair 31 (the first to fifth pairs 31a to 31e) are formed on the land portions 13 different from each other.

In general, pitch noise is known as a type of noise generated during running with the tire. For example, each time a region 32 (tread surface 2s), which is sectioned by the first to fifth groove-shaped portions 21 to 25, comes into contact with a road surface, an impact force is generated. This impact force tends to generate pitch noise by periodically vibrating the tread portion 2 and the sidewall portions 3 shown in FIG. 1.

In the present embodiment, the above-described arrangement rule 30 allows the first to fifth groove-shaped portions 21 to 25 to alternately come into contact with the ground constantly and continuously during running with the tire, from the one side S1 to the other side S2 (or from the other side S2 to the one side S1) in the tire circumferential direction. Thus, fluctuations in the above-described impact force decrease. Therefore, the tire 1 of the present embodiment reduces pitch noise generated by each land portion 13 (region 32), so that noise performance can be improved. Due to the synergistic effect of this improvement in noise performance and the attenuation of resonant sound energy by the sound damper 11 as described above, the overall noise performance is improved, and high quietness can be exhibited.

In the arrangement rule 30 of the present embodiment, the groove-shaped portions 20 forming each pair 31 are formed on the land portions 13 different from each other. Accordingly, in the present embodiment, the groove-shaped portions 20 forming each pair 31 are not continuously formed on each land portion 13. Thus, in order to form the first end 20a and the second end 20b at the same position, it is unnecessary, for example, to increase an angle θb of the groove-shaped portion 20 with respect to tire axial direction, or to increase the number of the groove-shaped portions 20 that are formed on each land portion 13. Therefore, the tire axial stiffness of each land portion 13 is prevented from decreasing more than necessary, so that both steering stability and noise performance (quietness) can be achieved.

In the arrangement rule 30 of the present embodiment, the groove-shaped portions 20 forming each pair 31 are formed on the center land portion 13A and the pair of middle land portions 13B (the inner middle land portion 13Bi and the outer middle land portion 13Bo). The center land portion 13A and the pair of middle land portions 13B tend to experience relatively high ground-contact pressure during straight running, so that pitch noise can be effectively reduced. Furthermore, since the groove-shaped portions 20 forming each pair 31 are formed on three or more land portions 13 different from each other, reduction in the tire axial stiffness of the land portion 13 is prevented, so that steering stability is further improved.

In the arrangement rule 30 of the present embodiment, the groove-shaped portions 20 forming each pair 31 are formed on the land portions 13 different from each other. However, the present invention is not limited thereto. For example, the groove-shaped portions 20 forming each pair 31 may be formed on the same land portion 13. In this case, since the groove-shaped portions 20 forming each pair 31 in the land portions 13 alternately come into contact with the ground constantly and continuously, fluctuations in the above-described impact force further decrease. In addition, for example, in a case where the number of the groove-shaped portions 20 is increased in order to form the first end 20a and the second end 20b at the same position, the edge components are increased, thus improving wet performance or the like.

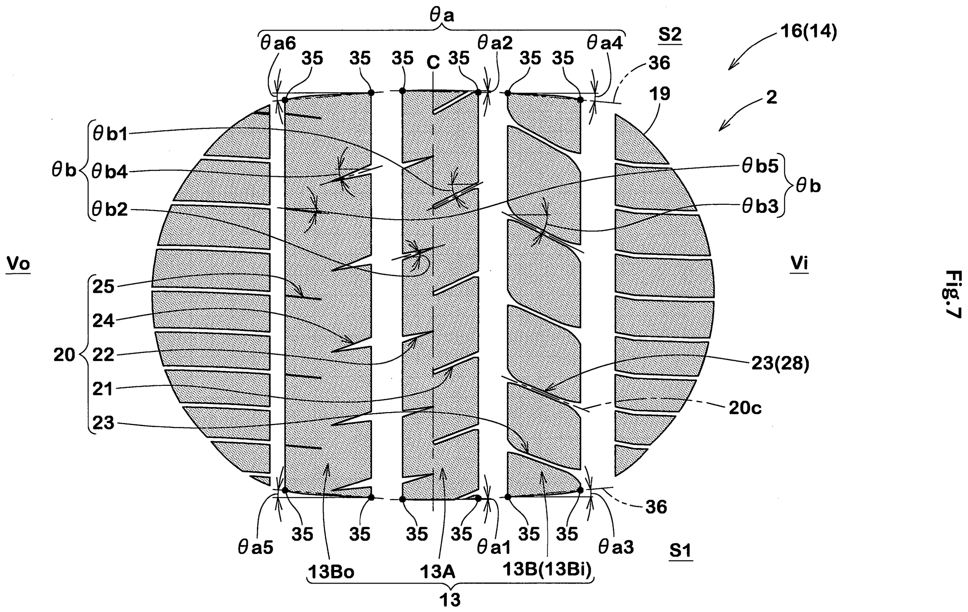

FIG. 7 illustrates the tread pattern 2P in the footprint 16 of the tread portion 2 in the 70% load-applied state. The footprint 16 in FIG. 7 shows a tread pattern in which the one side S1 and the other side S2 in the tire circumferential direction, as shown in FIG. 5 and FIG. 6, are reversed.

In the present embodiment, in the 70% load-applied state, the ground-contact end edges 19 on both sides in the tire circumferential direction of at least one land portion 13, of the plurality of land portions 13, are each provided at an angle θa with respect to the tire axial direction. In the present embodiment, the absolute value of the difference between the angle θa and the angle θb of the groove-shaped portion 20 formed on at least one land portion 13 with respect to the tire axial direction, is set to be 5 degrees or more. The angle θb which is used in the calculation of the absolute value is determined in the 70% load-applied state, similarly to the angle θa. In addition, the angle θa and the angle θb may be obtained from the footprint 16 acquired through known procedures, or from the calculation results of the ground-contact simulations using a computer.

The angle θa is specified at the ground-contact end edges 19 of each land portion 13 by a straight line 36 passing through both ends 35, 35 in the width direction of the land portion 13. In addition, the angle θa of the present embodiment is specified in the land portions 13 (the center land portion 13A, the inner middle land portion 13Bi, and the outer middle land portion 13Bo in the present example) on which the groove-shaped portions 20 subject to the arrangement rule 30 shown in FIG. 6 are formed. Thus, as the angle θa, an angle θa1 of the ground-contact end edge 19 on the one side S1 in the tire circumferential direction of the center land portion 13A, and an angle θa2 of the ground-contact end edge 19 on the other side S2 in the tire circumferential direction of the center land portion 13A are provided. In addition, as the angle θa, an angle θa3 of the ground-contact end edge 19 on the one side S1 in the tire circumferential direction of the inner middle land portion 13Bi, and an angle θa4 of the ground-contact end edge 19 on the other side S2 in the tire circumferential direction of the inner middle land portion 13Bi are provided. Further, as the angle θa, an angle θa5 of the ground-contact end edge 19 on the one side S1 in the tire circumferential direction of the outer middle land portion 13Bo, and an angle θa6 of the ground-contact end edge 19 on the other side S2 in the tire circumferential direction of the outer middle land portion 13Bo are provided.

The angles θa1 to θa6 of the ground-contact end edges 19 of the land portions 13 are each specified such that, when viewed from the vehicle inner side Vi toward the vehicle outer side Vo, an angle inclined from the one side S1 to the other side S2 in the tire circumferential direction is defined as positive and an angle inclined from the other side S2 to the one side S1 in the tire circumferential direction is defined as negative. In this case, in the inner middle land portion 13Bi, the angle $\theta$a3 of the ground-contact end edge 19 on the one side S1 is negative, and the angle $\theta$a4 of the ground-contact end edge 19 on the other side S2 is positive. In addition, in the outer middle land portion 13Bo, the angle $\theta$a5 of the ground-contact end edge 19 on the one side S1 is positive, and the angle $\theta$a6 of the ground-contact end edge 19 on the other side S2 is negative.

As described above, the angle $\theta$a of each ground-contact end edge 19 and the shape of the ground-contact surface 14 (footprint 16) can be adjusted appropriately by, for example, changing the thickness of the tread rubber 2G shown in FIG. 1, or changing components (the carcass 6, the belt layer 7, the band layer 9, and the like) having well-known structures and embedded inside the tread portion 2.

In the 70% load-applied state, the angle $\theta$b is specified at a position 39 (the first end 20a or the second end 20b) at which the groove center line 20c extending along the longitudinal direction of the groove-shaped portion 20 (the sipe body 28 described below) shown in FIG. 5 meets an edge 38 extending in the tire circumferential direction on each side in the tire axial direction of the land portion 13. In addition, the angle $\theta$b of the present embodiment is specified with respect to each groove-shaped portion 20 that is subject to the arrangement rule 30 shown in FIG. 5. Thus, as the angle $\theta$b, an angle $\theta$b1 of the first groove-shaped portion 21, an angle $\theta$b2 of the second groove-shaped portion 22, an angle $\theta$b3 of the third groove-shaped portion 23, an angle $\theta$b4 of the fourth groove-shaped portion 24, and an angle $\theta$b5 of the fifth groove-shaped portion 25 are provided.

The angles $\theta$b1 to $\theta$b5 of the groove-shaped portions 20 are each specified such that an angle inclined from the one side S1 to the other side S2 in the tire circumferential direction is defined as positive when viewed from the vehicle inner side Vi toward the vehicle outer side Vo, similar to the angle $\theta$a of the ground-contact end edge 19 of the land portion 13. In addition, the angles $\theta$b1 to $\theta$b5 of the groove-shaped portions 20 are each specified such that an angle inclined from the other side S2 to the one side S1 in the tire circumferential direction is negative. Thus, the angle $\theta$b1 of the first groove-shaped portion 21, the angle $\theta$b2 of the second groove-shaped portion 22, and the angle $\theta$b4 of the fourth groove-shaped portion 24 are negative. Meanwhile, the angle $\theta$b3 of the third groove-shaped portion 23 and the angle $\theta$b5 of the fifth groove-shaped portion 25 are positive.

In the present embodiment, the absolute value of the difference ($\theta$a1-$\theta$b1) between the angle $\theta$a1 of the ground-contact end edge 19 on the one side S1 of the center land portion 13A and the angle $\theta$b1 of the first groove-shaped portion 21 formed on the center land portion 13A is set to be 5 degrees or more. Further, the absolute value of the difference ($\theta$a2-$\theta$b1) between the angle $\theta$a2 of the ground-contact end edge 19 of the other side S2 of the center land portion 13A and the angle $\theta$b1 of the first groove-shaped portion 21 is set to be 5 degrees or more.

In the present embodiment, the absolute value of the difference ($\theta$a1-$\theta$b2) between the angle $\theta$a1 of the ground-contact end edge 19 on the one side S1 of the center land portion 13A and the angle $\theta$b2 of the second groove-shaped portion 22 formed on the center land portion 13A is set to be 5 degrees or more. Further, the absolute value of the difference ($\theta$a2-$\theta$b2) between the angle $\theta$a2 of the ground-contact end edge 19 on the other side S2 of the center land portion 13A and the angle $\theta$b2 of the second groove-shaped portion 22 is set to be 5 degrees or more.

In the present embodiment, the absolute value of the difference ($\theta$a3-$\theta$b3) between the angle $\theta$a3 of the ground-contact end edge 19 on the one side S1 of the inner middle land portion 13Bi and the angle $\theta$b3 of the third groove-shaped portion 23 formed on the inner middle land portion 13Bi is set to be 5 degrees or more. Further, the absolute value of the difference ($\theta$a4-$\theta$b3) between the angle $\theta$a4 of the ground-contact end edge 19 on the other side S2 of the inner middle land portion 13Bi and the angle $\theta$b3 of the third groove-shaped portion 23 is set to be 5 degrees or more.

In the present embodiment, the absolute value of the difference ($\theta$a5-$\theta$b4) between the angle $\theta$a5 of the ground-contact end edge 19 on the one side S1 of the outer middle land portion 13Bo and the angle $\theta$b4 of the fourth groove-shaped portion 24 formed on the outer middle land portion 13Bo is set to be 5 degrees or more. Further, the absolute value of the difference ($\theta$a6-$\theta$b4) between the angle $\theta$a6 of the ground-contact end edge 19 on the other side S2 of the outer middle land portion 13Bo and the angle $\theta$b4 of the fourth groove-shaped portion 24 is set to be 5 degrees or more.

In the present embodiment, the absolute value of the difference ($\theta$a5-$\theta$b5) between the angle $\theta$a5 of the ground-contact end edge 19 on the one side S1 of the outer middle land portion 13Bo and the angle $\theta$b5 of the fifth groove-shaped portion 25 formed on the outer middle land portion 13Bo is set to be 5 degrees or more. Further, the absolute value of the difference ($\theta$a6-$\theta$b5) between the angle $\theta$a6 of the ground-contact end edge 19 on the other side S2 of the outer middle land portion 13Bo and the angle $\theta$b5 of the fifth groove-shaped portion 25 is set to be 5 degrees or more.

As described above, in the present embodiment, since the absolute value of the difference between the angle $\theta$a and the angle $\theta$b is set to be 5 degrees or more, the alignment of the inclination directions of the ground-contact end edge 19 and the groove-shaped portion 20 is prevented. Thus, during running with the tire, the groove-shaped portions 20 can gradually come into contact with or separate from the ground with respect to the ground-contact end edges 19. Therefore, when the groove-shaped portions 20 come into contact with or separate from the ground with respect to the ground-contact end edges 19, sudden compression or release of the air inside the groove-shaped portions 20 is prevented, so that the amplification of pitch noise volume can be suppressed. This improves quietness.

In the tire 1 of the present embodiment, as shown in FIG. 6, the first end 20a of the groove-shaped portion 20 corresponding to one of the pair 31 and the second end 20b of the groove-shaped portion 20 corresponding to the other of the pair 31 are formed at the same position in the tire circumferential direction, so that pitch noise can be reduced. Furthermore, in the tire 1 of the present embodiment, as shown in FIG. 7, the absolute value of the difference $(\theta a-\theta b)$ between the angle $\theta a$ of the ground-contact end edge 19 of the land portion 13 and the angle $\theta b$ of the groove-shaped portion 20 formed on the land portion 13 is set to be 5 degrees or more, so that the amplification of pitch noise volume can be suppressed. Therefore, the tire 1 of the present embodiment can reduce pitch noise and thus improves noise performance (quietness). Accordingly, high quietness can be exhibited.

In the present embodiment, it is preferable that, in all of the center land portion 13A and the pair of middle land portions 13B (the inner middle land portion 13Bi and the outer middle land portion 13Bo), the absolute value of the difference $(\theta a-\theta b)$ between the angle $\theta a$ of the ground-contact end edge 19 and the angle $\theta b$ of the groove-shaped portion 20 is set to be 5 degrees or more. Since these land portions 13 primarily come into contact with the ground during both straight running and cornering, the amplification of pitch noise volume is effectively suppressed by setting the absolute value to be 5 degrees or more, so that the noise performance (quietness) can be further improved.

On the other hand, if the absolute value of the difference $(\theta a-\theta b)$ between the angle $\theta a$ of the ground-contact end edge 19 and the angle $\theta b$ of the groove-shaped portion 20 is larger than necessary, the angle $\theta b$ of the groove-shaped portion 20 increases, tread stiffness decreases, and thus steering stability may be reduced. Thus, the absolute value of the difference $(\theta a-\theta b)$ is preferably 50 degrees or less.

The absolute value of the angle $\theta b1$ of the first groove-shaped portion 21 with respect to the tire axial direction, the absolute value of the angle $\theta b2$ of the second groove-shaped portion 22 with respect to the tire axial direction, and the absolute value of the angle $\theta b4$ of the fourth groove-shaped portion 24 with respect to the tire axial direction can be set to, for example, 10 to 30°. Meanwhile, the absolute value of the angle $\theta b3$ of the third groove-shaped portion 23 with respect to the tire axial direction can be set to, for example, 20 to 40°. In addition, the absolute value of the angle $\theta b5$ of the fifth groove-shaped portion 25 can be set to, for example, 5 to 25°. The absolute value of an angle $\theta b6$ of the sixth

groove-shaped portion 26 with respect to the tire axial direction and the absolute value of an angle $\theta b7$ of the seventh groove-shaped portion 27 with respect to the tire axial direction can be set to, for example, 0 to 15°. However, each absolute value of the angles $\theta b1$ to $\theta b7$ is not limited to the above-described ranges.

Although the particularly preferred embodiment of the present invention has been described in detail above, the present invention is not limited to the above-described embodiment, and various modifications can be made to implement the present invention.

[Additional Note]

The present invention includes the following aspects.

[Present Invention 1]

A pneumatic tire including: a tread portion; and a sound damper made of a porous material and fixed to a tire inner cavity surface of the tread portion, wherein

> the sound damper extends in a tire circumferential direction along a tire equator, and
> in a 70% load-applied state where the pneumatic tire is fitted on a standardized rim at a standardized internal pressure, 70% of a standardized load is applied to the pneumatic tire, and the pneumatic tire is brought into contact with a flat surface at a camber angle of 0 degrees, a ground-contact surface of the tread portion has a ratio L/Lm of a maximum ground-contact length L in the tire circumferential direction to a ground-contact length Lm, in the tire circumferential direction, within a range centered on the tire equator and equal to or less than 70% of a maximum ground-contact width W in a tire axial direction, and the ratio L/Lm satisfies the following formula (1):

$$1.00 < L/Lm < 1.10 \ldots(1).$$

[Present Invention 2]

The pneumatic tire according to Present Invention 1, wherein a maximum width in the tire axial direction of the sound damper is 25% to 55% of the maximum ground-contact width W.

[Present Invention 3]

The pneumatic tire according to Present Invention 1 or 2, wherein, in a tire meridional cross section in a standardized state where the pneumatic tire is fitted on the standardized rim at the standardized internal pressure and no load is applied to the pneumatic tire, a cross-sectional area of the sound damper is 5% to 15% of a cross-sectional area of a tire inner cavity.

[Present Invention 4]

The pneumatic tire according to any one of Present Inventions 1 to 3, wherein the sound damper has a density of 15 to 35 kg/m$^3$.

[Present Invention 5]

The pneumatic tire according to any one of Present Inventions 1 to 4, wherein a ratio L/L2 of the maximum ground-contact length L to a ground-contact length L2 in the tire circumferential direction at each of positions obtained by projecting both end portions in the tire axial direction of the sound damper onto the ground-contact surface, satisfies the following formula (2):

$$1.00 < L/L2 < 1.10 \dots(2).$$

[Present Invention 6]

The pneumatic tire according to any one of Present Inventions 1 to 5, wherein a land ratio in a region obtained by projecting the sound damper onto an outer surface of the tread portion is smaller than a land ratio in an entirety of the tread portion.

[Present Invention 7]

The pneumatic tire according to any one of Present Inventions 1 to 6, wherein

the tread portion includes

a pair of center circumferential grooves continuously extending in the tire circumferential direction, in a region obtained by projecting the sound damper onto an outer surface of the tread portion, and
a pair of shoulder circumferential grooves continuously extending in the tire circumferential direction, on both outer sides with respect to the region in the tire axial direction, and

a total of groove widths of the pair of center circumferential grooves is larger than a total of groove widths of the pair of shoulder circumferential grooves.

[Present Invention 8]

The pneumatic tire according to any one of Present Inventions 1 to 7, wherein

the tread portion includes at least one center circumferential groove formed adjacent to the tire equator and continuously extending in the tire circumferential direction, and
at least one protrusion protruding in a tire radial direction is formed on a groove bottom portion of the center circumferential groove.

[Present Invention 9]

The pneumatic tire according to any one of Present Inventions 1 to 8, wherein

a belt layer, and a band layer disposed outward of the belt layer in the tire radial direction are embedded in the tread portion,
the band layer includes a band ply in which band cords are arranged in the tire circumferential direction, and
each band cord is a hybrid cord formed by twisting an aramid fiber cord and a nylon fiber cord.

[Present Invention 10]

The pneumatic tire according to any one of Present Inventions 1 to 9, wherein the sound damper has a flattened, laterally elongated shape in which a maximum thickness in the tire radial direction is smaller than a maximum width in the tire axial direction.

**Claims**

1. A pneumatic tire (1) comprising: a tread portion (2); and a sound damper (11) made of a porous material and fixed to a tire inner cavity surface (15s) of the tread portion (2), wherein

the sound damper (11) extends in a tire circumferential direction along a tire equator (C), and in a 70% load-applied state where the pneumatic tire (1) is fitted on a standardized rim (10) at a standardized internal pressure, 70% of a standardized load is applied to the pneumatic tire (1), and the pneumatic tire (1) is brought into contact with a flat surface at a camber angle of 0 degrees, a ground-contact surface (14) of the tread portion (2) has a ratio L/Lm of a maximum ground-contact length L in the tire circumferential direction to a ground-contact length Lm, in the tire circumferential direction, within a range centered on the tire equator (C) and equal to or less than 70% of a maximum ground-contact width W in a tire axial direction, and the ratio L/Lm satisfies the following formula (1):

$$1.00 < L/Lm < 1.10 \dots(1).$$

2. The pneumatic tire (1) according to claim 1, wherein a maximum width (W3) in the tire axial direction of the sound damper (11) is 25% to 55% of the maximum ground-contact width W.

3. The pneumatic tire (1) according to claim 1 or 2, wherein, in a tire meridional cross section in a standardized state where the pneumatic tire (1) is fitted on the standardized rim (10) at the standardized internal pressure and no load is applied to the pneumatic tire (1), a cross-sectional area (A1) of the sound damper (11) is 5% to 15% of a cross-sectional area (A2) of a tire inner cavity (15).

4. The pneumatic tire (1) according to any one of claims 1 to 3, wherein the sound damper (11) has a density of 15 to 35 kg/m$^3$.

5. The pneumatic tire (1) according to any one of claims 1 to 4, wherein
a ratio L/L2 of the maximum ground-contact length L to a ground-contact length L2 in the tire circumferential direction at each of positions obtained by projecting both end portions (11t) in the tire axial direction of the sound damper (11) onto the ground-contact surface (14), satisfies the following formula (2):

$$1.00 < L/L2 < 1.10 \ldots (2).$$

6. The pneumatic tire (1) according to any one of claims 1 to 5, wherein a land ratio in a region (T1) obtained by projecting the sound damper (11) onto an outer surface of the tread portion (2) is smaller than a land ratio in an entirety of the tread portion (2).

7. The pneumatic tire (1) according to any one of claims 1 to 6, wherein

the tread portion (2) includes

a pair of center circumferential grooves (12A) continuously extending in the tire circumferential direction, in a region (T1) obtained by projecting the sound damper (11) onto an outer surface of the tread portion (2), and
a pair of shoulder circumferential grooves (12B) continuously extending in the tire circumferential direction, on both outer sides with respect to the region (T1) in the tire axial direction, and

a total of groove widths (W1a) of the pair of center circumferential grooves (12A) is larger than a total of groove widths (W1b) of the pair of shoulder circumferential grooves (12B).

8. The pneumatic tire (1) according to any one of claims 1 to 7, wherein

the tread portion (2) includes at least one center circumferential groove (12A) formed adjacent to the tire equator (C) and continuously extending in the tire circumferential direction, and
at least one protrusion (41) protruding in a tire radial direction is formed on a groove bottom portion (40) of the center circumferential groove (12A).

9. The pneumatic tire (1) according to any one of claims 1 to 8, wherein

a belt layer (7), and a band layer (9) disposed outward of the belt layer (7) in the tire radial direction are embedded in the tread portion (2), the band layer (9) includes a band ply (9A) in which band cords are arranged in the tire circumferential direction, and
each band cord is a hybrid cord formed by twisting an aramid fiber cord and a nylon fiber cord.

10. The pneumatic tire (1) according to any one of claims 1 to 9, wherein the sound damper (11) has a flattened, laterally elongated shape in which a maximum thickness (D3) in the tire radial direction is smaller than a maximum width (W3) in the tire axial direction.

# Fig.1

# Fig.2

**Fig.3**

**Fig.4**

# Fig.5

## Fig.6

**Fig.7**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/161138 A1 (YUKAWA NAOKI [JP] ET AL) 28 July 2005 (2005-07-28) <br> * paragraph [0043] * <br> * paragraph [0045] - paragraph [0052] * <br> * paragraph [0055] - paragraph [0056] * <br> * paragraph [0064] - paragraph [0066] * <br> * figures * <br> ----- | 1-10 | INV. <br> B60C19/00 <br> B60C5/00 <br> B60C11/03 <br> B60C11/04 <br> B60C11/11 <br> B60C9/00 |
| A,D | JP 2006 036083 A (SUMITOMO RUBBER IND) 9 February 2006 (2006-02-09) <br> * abstract; figures * <br> ----- | 1-5,10 | |
| A | EP 3 822 091 A1 (SUMITOMO RUBBER IND [JP] ET AL.) 19 May 2021 (2021-05-19) <br> * paragraph [0042] - paragraph [0043] * <br> * figures * <br> ----- | 1,3-5,10 | |
| Y | CN 117 917 329 A (SUMITOMO RUBBER IND) 23 April 2024 (2024-04-23) <br> * abstract; figures * <br> ----- | 1-10 | |
| Y | EP 3 572 244 A1 (SUMITOMO RUBBER IND [JP]) 27 November 2019 (2019-11-27) <br> * paragraph [0024] - paragraph [0028] * <br> * figures * <br> ----- | 8 | TECHNICAL FIELDS SEARCHED (IPC) <br><br> B60C |
| Y,D | JP 2020 196281 A (SUMITOMO RUBBER IND) 10 December 2020 (2020-12-10) <br> * abstract; figures * <br> ----- | 8 | |
| Y | EP 4 091 838 B1 (SUMITOMO RUBBER IND [JP]) 30 October 2024 (2024-10-30) <br> * paragraph [0041] - paragraph [0043] * <br> * paragraph [0067] - paragraph [0072] * <br> * figures * <br> ----- <br> -/-- | 9 | |

The present search report has been drawn up for all claims

| Place of search | Date of completion of the search | Examiner |
|---|---|---|
| Munich | 1 June 2026 | Avisse, Marylène |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 25 22 4650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2015/171093 A1 (KORDSA GLOBAL ENDUSTRIYEL IPLIK VE KORD BEZI SANAY [TR]) 12 November 2015 (2015-11-12) * abstract; figures * ----- | 9 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 1 June 2026 | Avisse, Marylène |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4650

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2026

| Patent document cited in search report | | | Publication date | Patent family member(s) | | | Publication date |
|---|---|---|---|---|---|---|---|
| US 2005161138 | A1 | | 28-07-2005 | CN | 1647956 | A | 03-08-2005 |
| | | | | EP | 1559590 | A2 | 03-08-2005 |
| | | | | JP | 4044526 | B2 | 06-02-2008 |
| | | | | JP | 2005212524 | A | 11-08-2005 |
| | | | | US | 2005161138 | A1 | 28-07-2005 |
| JP 2006036083 | A | | 09-02-2006 | JP | 4138711 | B2 | 27-08-2008 |
| | | | | JP | 2006036083 | A | 09-02-2006 |
| EP 3822091 | A1 | | 19-05-2021 | CN | 112512835 | A | 16-03-2021 |
| | | | | EP | 3822091 | A1 | 19-05-2021 |
| | | | | JP | 7089433 | B2 | 22-06-2022 |
| | | | | JP | 2020019390 | A | 06-02-2020 |
| | | | | US | 2021309055 | A1 | 07-10-2021 |
| | | | | WO | 2020027115 | A1 | 06-02-2020 |
| CN 117917329 | A | | 23-04-2024 | CN | 117917328 | A | 23-04-2024 |
| | | | | CN | 117917329 | A | 23-04-2024 |
| | | | | CN | 117917330 | A | 23-04-2024 |
| | | | | JP | 2024061154 | A | 07-05-2024 |
| EP 3572244 | A1 | | 27-11-2019 | EP | 3572244 | A1 | 27-11-2019 |
| | | | | JP | 7087671 | B2 | 21-06-2022 |
| | | | | JP | 2019202607 | A | 28-11-2019 |
| | | | | US | 2019359008 | A1 | 28-11-2019 |
| JP 2020196281 | A | | 10-12-2020 | CN | 112009176 | A | 01-12-2020 |
| | | | | EP | 3744536 | A1 | 02-12-2020 |
| | | | | JP | 7310314 | B2 | 19-07-2023 |
| | | | | JP | 2020196281 | A | 10-12-2020 |
| | | | | US | 2020376900 | A1 | 03-12-2020 |
| EP 4091838 | B1 | | 30-10-2024 | EP | 4091838 | A1 | 23-11-2022 |
| | | | | JP | 7669789 | B2 | 30-04-2025 |
| | | | | JP | 2022177709 | A | 01-12-2022 |
| WO 2015171093 | A1 | | 12-11-2015 | BR | 112016026029 | A2 | 19-06-2018 |
| | | | | CN | 106573499 | A | 19-04-2017 |
| | | | | EP | 3140133 | A1 | 15-03-2017 |
| | | | | ES | 2671039 | T3 | 04-06-2018 |
| | | | | HU | E037894 | T2 | 28-09-2018 |
| | | | | KR | 20160148564 | A | 26-12-2016 |
| | | | | LU | 93247 | B1 | 27-03-2017 |
| | | | | PL | 3140133 | T3 | 31-08-2018 |
| | | | | PT | 3140133 | T | 05-06-2018 |
| | | | | SI | 3140133 | T1 | 31-07-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 22 4650

01-06-2026

| Patent document cited in search report | Publication date | Patent family member(s) | | Publication date |
|---|---|---|---|---|
| | | US | 2017072747 A1 | 16-03-2017 |
| | | WO | 2015171093 A1 | 12-11-2015 |

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006036083 A

- JP 2020196281 A